Europäisches Patentamt

**European Patent Office**

**Office européen des brevets**

(11) Veröffentlichungsnummer: **0 310 006**

**A1**

(12) **EUROPÄISCHE PATENTANMELDUNG**

(21) Anmeldenummer: **88115946.1**

(22) Anmeldetag: **28.09.88**

(51) Int. Cl.4: **H04N 9/28 , H04N 3/233**

(30) Priorität: **30.09.87 DE 3733007**

(43) Veröffentlichungstag der Anmeldung:
**05.04.89 Bulletin 89/14**

(84) Benannte Vertragsstaaten:
**ES GR**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Geiger, Erich, Dipl.-Ing.**
**Panoramaweg 19**
**D-7734 Unterkirnach(DE)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Schaltungsanordnung zur Linearisierung der Bildwiedergabe einer Kathodenstrahlröhre**

(57) Bei symmetrischer Zeilenablenkung kann infolge von Hysterese der Elektronenstrahl von Zeile zu Zeile verschoben werden, so daß keine Synchronität mit dem Bildinhalt vorliegt. Zur Beseitigung dieses Fehlers wird angestrebt, die Abweichungen des Elektronenstrahls an den Bildrändern sicher zu erkennen.

Erfindungsgemäß wird wenigstens ein vertikaler, vorzugsweise an einer der Seiten der lichtemittierenden Schicht angeordneter Indexstreifen angeordnet. Ferner sind Sensoren vorgesehen, die mit einer Ausweteschaltung zur Auswertung des Zeitpunktes, in dem der Elektronenstrahl den Indexstreifen passiert, verbunden. Eine Komperatorschaltung zum Vergleich der Indexsignale mit den Zeilenablenksignalen bewirkt über eine Steuerschaltung eine Verschiebung des Bildinhaltes von aufeinanderfolgend geschriebenen Zeilen.

Die Erfindung ist besonders für Fernsehempfänger mit großer Bildröhre und energiesparender Zeilenablenkschaltung geeignet.

EP 0 310 006 A1

## Schaltungsanordnung zur Linearisierung der Bildwiedergabe einer Kathodenstrahlröhre

Die Erfindung betrifft eine Schaltungsanordnung nach dem Oberbegriff des Anspruchs 1.

Linearitätsfehler bei der Bildwiedergabe einer Kathodenstrahlröhre können sich z.B. als Konvergenzfehler, Kissenverzerrungen oder Zeilenverschiebungen äußern. Aus der DE-OS 31 36 029 ist bereits eine Schaltungsanordnung bekannt, die die Angabe der momentanen Lage des Bildpunktes durch eine Rückmeldung ermöglicht. Dabei wird eine Indexröhre verwendet, bei der zwischen senkrecht verlaufenden Farbstreifen weitere Streifen eingefügt sind. Durch Auswerten der Lage der Bildpunkte und Steuerung einer Speichereinrichtung läßt sich eine Zuordnung zwischen den Bildpunkten und dem zugehörigen Signal herstellen und Linearitätsfehler beseitigen.

Der Erfindung liegt die Aufgabe zugrunde, eine Schaltungsanordnung nach den Oberbegriffen der Ansprüche 1 und 3 dahingehend zu verbessern, daß die Indexeinrichtung unabhängig von der des Bild darstellenden Leuchtschicht anordnerbar ist.

Diese Aufgabe wird bei der Schaltungsanordnung nach dem Oberbegriff des Anspruchs 1 und des nebengeordneten Anspruchs 3 durch die jeweils im kennzeichnenden Teil angegebenen Merkmale gelöst. .

Die Ausgestaltung nach Anspruch 1 gestattet die Anordnung der Indexeinrichtung unabhängig von der Leuchtschicht, wodurch eine Verringerung der für die Bildwiedergabe zur Verfügung stehenden Fläche und eine störende Beeinflussung der Bildwiedergabe vermieden werden kann. Werden die ersten Elektroden innerhalb der Projektionsfläche des Elektronenstrahls auf die Bildschicht angeordnet, so werden die Elektroden zweckmäßig gelocht ausgebil det. Im Randbereich oder außerhalb der Projektionsfläche des Elektronenstrahls können sie auch durchgehend ausgeführt sein. Die Wirkungsweise der Erfindung besteht darin, daß bei Auftreffen des Elektronenstrahls auf die erste Elektrode oder bei Streifen derselben eine Ladung auf der Elektrode aufgebaut wird, die kapazitiv abgegriffen werden kann.

Eine Weiterbildung sieht vor, daß die ersten Elektroden im inneren der Röhre angeordnet und über Ableitwiderstände mit der Lochmaske verbunden sind und die zweiten Elektroden außen auf der Mantelfläche der Röhre angeordnet sind.

durch diese Maßnahme läßt sich das Indexsignal außerhalb der Röhre abnehmen ohne daß Durchführungen durch den Glaskörper notwendig sind.

Die Ausgestaltung der Erfindung nach Anspruch 3 gestattet die Herstellung der Indexstreifen zusammen mit der Herstellung der Leuchtschicht.

Dabei ergibt sich ein exakter geometrischer Bezug zwischen den Indexstreifen und der Leuchtschicht. Das an Bildrändern übliche Maximum der Nichtlinearitäten fällt mit der örtliche Lage der Indexstreifen zusammen. Dies erleichtert die Auswertung der Indexsignale. Außerdem wird die Leuchtschicht nicht durch die Indexstreifen zerklüftet, so daß keine Beeinträchtigung des Bildeindrucks stattfindet.

Besonders vorteilhaft ist eine Ausgestaltung, bei der einer Ablenkschaltung mit symmetrischer Zeilenablenkung der Auswerteschaltung eine Komperatorschaltung zum Vergleich der Indexsignale mit den Zeilenablenksignalen nachgeschaltet ist und die Steuerschaltung als Stellglied zur Verschiebung des Bildinhaltes von aufeinanderfolgend geschriebenen Zeilen ausgebildet ist.

Es wird dann die Bahn des Elektronenstrahls an den Bildrändern mittels der Indexstreifen aufgenommen und mit den Zeilenablenk impulsen verglichen. Auf diese Weise ergibt sich ein Signal, welches bei zunehmender Abweichung, die zu einem sichtbaren Versatz zwischen aufeinanderfolgenden Zeilen führen würde, zunimmt. Dieses Signal wird dazu verwendet, eine entsprechende Korrektur durchzuführen. Eine solche Korrektur kann einmal in einer Regelung der Ablenkung bestehen, zum anderen aber auch in einer entsprechenden Voreilung oder Verzögerung der Wiedergabe der Bildinhaltssignale. Wird also der Elektronenstrahl z.B. zu weit nach rechts geschrieben, so werden zweckmäßig die Bildinhaltssignale der nächst folgenden Zeile früher ausgegeben, sodaß die zusammengehörenden Bildpunkte untereinander zu liegen kommen. Dies geschieht in der Weise, daß der Bildinhalt in einem Speicher, der die Informationen einer Bildzeile umfaßt, gespeichert wird und der Adresszähler soweit vorgesetzt oder zurückgesetzt wird, daß bei der nachfolgenden Adressierung der Speicherplätze die Verschiebung ausgeglichen wird.

Weiterbildungen und vorteilhafte Ausführungsformen ergeben sich aus den Ansprüchen, der weiteren Beschreibung und der Zeichnung, die Ausführungsbeispiele der Erfindung darstellt.

In der Zeichnung zeigen:

Fig. 1 einen Teillängsschnitt durch eine Kathodenstrahlröhre mit einer als Elektroden ausgebildeten Indexeinrichtung,

Fig. 2 ein Blockschaltbild einer Schaltung zur Konvergenzkorrektur und

Fig. 3 ein Blockschaltbild einer Schaltung zur Korrektur von Zeilenverschiebungen.

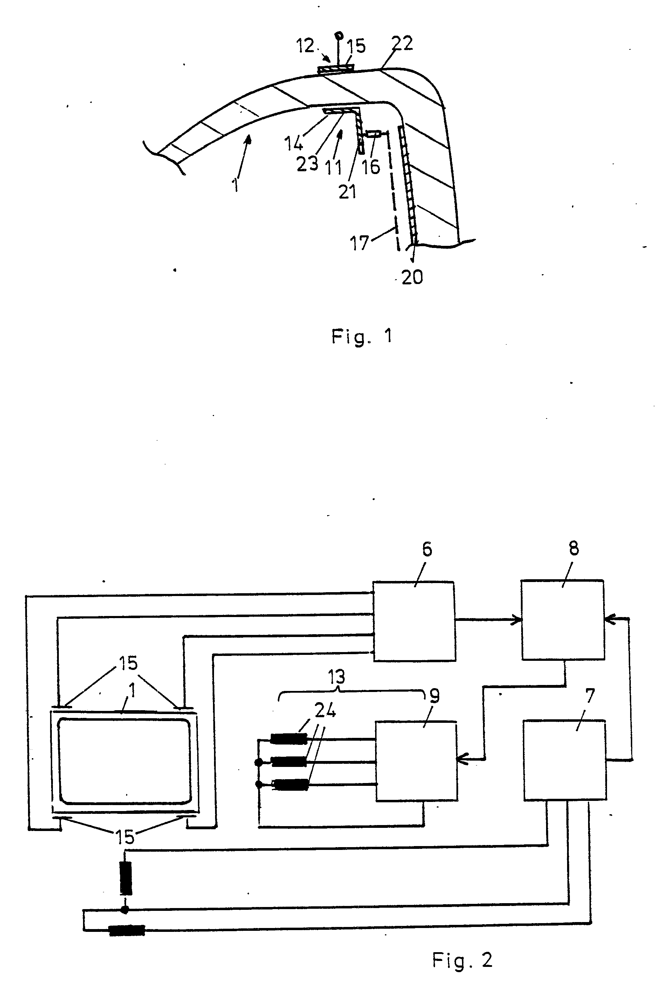

In Fig. 1 ist ein Teillängsschnitt einer Kathodenstrahlröhre 1 dargestellt. Auf der Innenseite einer Frontplatte 18 befindet sich eine Leuchtschicht 20, dahinter ist eine Lochmaske 17 angeordnet, Hinter der Lockmaske 17 sind erste Elektroden 14 angeordnet, die im Querschnitt L-förmig ausgebildet sind. Ein zur Leuchtschicht 20 paralleler Schenkel 21 erstreckt sich in die Projektionsfläche des Elektronenstrahls während ein zur Mantelfläche 22 der Röhre 1 paralleler Schenkel 23 an der Mantelfläche 22 anliegt. Außen auf der Mantelfläche 22 der Röhre 1 sind zweite Elektroden 15 angeordnet, die den ersten Elektroden 14 genau gegenüberliegen. Die zweiten Elektroden 15 sind mit den ersten 14 kapazitiv gekoppelt. Die ersten Elektroden 15 sind noch mit der Lochmaske 17 über Ableitwiderstände 16 verbunden.

Die Anordnung aus ersten und zweiten Elektroden 14,15 mit Ableitwiderständen 16 kann mehrfach vorhanden sein. Vorteilhaft ist z.B., in den Ecken und der Mitte des oberen und unteren Randes sowie gegebenenfalls in der Mitte der seitlichen Ränder Elektroden 14,15 vorzusehen. Beim Auftreffen des Elektronenstrahls auf die ersten Elektroden 14 wird eine Ladung auf diesen erzeugt, die sich kapazitiv auf die zweiten Elektroden 15 überträgt und dort abgenommen werden kann. die Ladung fließt über die Ableitwiderständ 16 wieder ab, sobald der Elektronenstrahl in eine andere Richtung von den Elektroden 14 abgelenkt wird. Sind die ersten Elektroden 14 gelocht, ergibt sich für den zeitlichen Verlauf der Ladung eine Einsattelung, wenn der Elektronenstrahl über die Elektrode hinweggeführt wird. Diese Eigenschaft läßt sich besonders vorteilhaft zur Bestimmung der Konvergenz ausnutzen, wenn bei einer Farbbildröhre Indexsignale für alle drei Elektronenstrahlen ermittelt werden.

Eine Schaltung zur Konvergenzkorrektur ist als Blockschaltbild in Fig. 2 dargestellt. Als Indexeinrichtung 11 dienen die in Fig. 1 dargestellten Elektroden 14. Die von den zweiten Elektroden 15 abgegriffenen Indexsignale werden einer Auswerteschaltung 6 zugeführt. Ausgangssignale der Auswerteschaltung 6 und Signale einer Ablenkschaltung 7 gelangen zu einem Komparator 8. Dem Komparator 8 ist ein Stellglied 9 nachgeschaltet das zur dynamischen Konvergenzkorrektur eine Konvergenzschaltung 24 ansteuert.

Mit Hilfe der Indexeinrichtung 11 werden die Zeitpunkte ermittelt, in denen der oder die Elektronenstrahlen die Elektroden 14 erreichen. Wenn diese Zeitpunkte nicht mit den durch die Ablenkschaltung vorgegebenen übereinstimmen, werden die Ablenkungen der übrigen Elektronenstrahlen durch die Konvergenzschaltung 24 entsprechend verändert, so daß schließlich die Zeitpunkte zusammenfallen und eine Deckung der zeitlichen Auftreffpunkte der Elektronenstrahlen hergestellt ist.

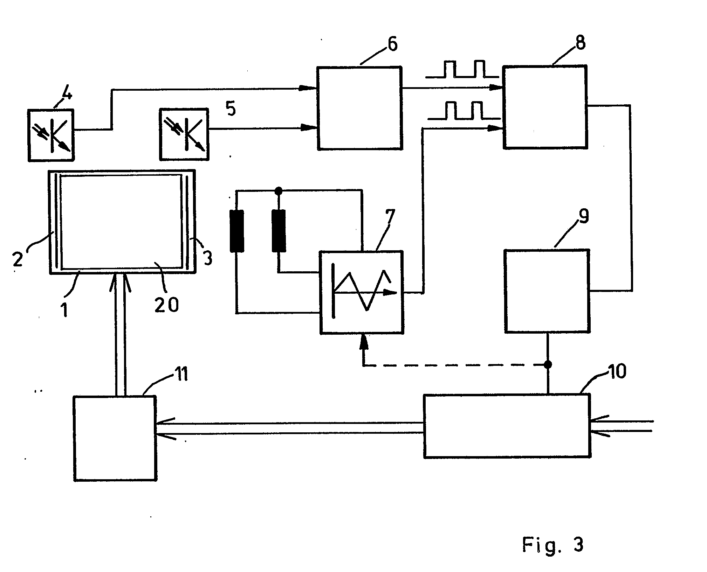

Fig. 3 zeigt ein Blockschaltbild einer Schaltung zur Korrektur von Zeilenverschiebungen. Neben der Leuchtschicht 20 einer Kathodenstrahlröhre 1 ist am linken Bildrand ein Indexstreifen 2 und am rechten Bildrand ein Indexstreifen 3 angeordnet. Die Indexstreifen 2,3 erstrecken sich vertikal und sind vorzugsweise am äußersten Rand der sichtbaren Leuchtschicht 20 angeordnet. Die Indexstreifen 2,3 können aus einer lichtemittierenden Schicht bestehen, die bei Auftreffen des Elektronenstrahls in einer Farbe aufleuchtet, die vorzugsweise im nichtsichtbaren Bereich liegt, z.B. ultraviolett ist. Den Indexstreifen 2 und 3 sind fotosensorische Elemente 4 und 5 zugeordnet, die bei Aufleuchten der Streifen ein Signal abgeben, daß in einer Auswerteschaltung 6 weiterverarbeitet wird. Am Ende der Auswerteschaltung 6 kann ein Signal abgegriffen werden, das aus einer Impulsfolge mit der Zeilenfrequenz besteht. Die Impulse geben den Zeitpunkt an, in dem der Elektronenstrahl die Indexstreifen 2,3 passiert. Aus einer Ablenkschaltung 7 für die Zeilenablenkung werden entsprechende Impulse ausgegeben, deren zeitliches Eintreffen vorzugsweise so gewählt ist, daß dieses bei linearem Arbeiten mit dem Zeitpunkt zusammenfällt, in den der Elektronenstrahl die Indexstreifen 2,3 passiert. Dementspre chend ergibt sich bei einer Nichtlinearität z.B. in Folge einer Hysterese eine Verschiebung zwischen den Impulsen. Das nach der Verschiebung entstehende Differenzsignal zwischen Impulsen aus der Auswerteschaltung 6 und aus der Ablenkschaltung 7, wird in einem nachgeschalteten Komperator 8 ermittelt, der daraufhin ein Steuersignal erzeugt, welches einem Stellglied 9 zugeführt wird. Das Stellglied 9 kann einmal im Sinne einer Regelung auf die Ablenkschaltung 7 einwirken und die Hysterese kompensieren, oder auch einen Zähler setzen, der die Adressierung eines Zeilenspeichers 10 übernimmt. Im letzteren Fall werden dann die Bildinhaltsignale des Zeilenspeichers 10 um das Maß verschoben, das erforderlich ist, um die zusammengehörenden Bildinhalte aufeinanderfolgend geschriebener Zeilen in Flucht zu bringen. Dem Zeilenspeicher 10 ist eine entsprechende Video-Stufe 11 nachgeschaltet, die die Helligkeitssteuerung des Elektronenstrahls übernimmt.

Der Vorteil dieser Maßnahme besteht darin, daß eine sehr schnelle Reaktion auf Verschiebungen möglich ist und das Fehler exakt ausgeglichen werden können. Neben einer Nichtlinearität durch eine Hysterese besteht auch die Möglichkeit, ein unregelmäßiges nichtlineares Verhalten der Ablenkschaltung 7 entsprechend zu kompensieren.

**Ansprüche**

1. Schaltungsanordnung zur Linearisierung der Bildwiedergabe einer Kathodenstrahlröhre (1) bestehend aus wenigstens einer Indexeinrichtung (11) die im Ablenkbereich des Elektronenstrahls angeordnet ist, Sensoren (12) zur Erfassung von Indexsignalen, einer Auswerteschaltung (6) sowie einer Steuerschaltung (13), die mit der Ablenkschaltung (7) der Röhre (1) und/oder einem Zeilenspeicher (10) verbunden ist, **dadurch gekennzeichnet, daß** die Indexeinrichtung (11) aus vorzugsweise gelochten ersten Elektroden (14) und die Sensoren (12) aus kapazitiv mit den ersten Elektroden (14) gekoppelten zweiten Elektroden (15) bestehen.

2. Schaltungsanordnung nach Anspruch 1, **dadurch gekennzeichnet, daß** die ersten Elektroden (14) im inneren der Röhre (1) angeordnet und über Ableitwiderstände (16) mit der Lochmaske (17) verbunden sind und die zweiten Elektroden (15) außen auf der Mantelfläche der Röhre (1) angeordnet sind.

3. Schaltungsanordnung zur Linearisierung der Bildwiedergabe einer Kathodenstrahlröhre (1) bestehend zus wenigstens einer Indexeinrichtung (11) die im Ablenkbereich des Elektronenstrahls angeordnet ist, Sensoren (12) zur Erfassung von Indexsignalen, einer Auswerteschaltung (6) sowie einer Steuerschaltung (13), die mit der Ablenkschaltung (7) der Röhre (1) und/oder einem Zeilenspeicher (10) verbunden ist, **dadurch gekennzeichnet, daß** die Indexeinrichtung (11) aus lichtemittierenden Schichten (2,3) besteht, die an beiden Seiten der Bildschicht der Röhre (1) angeordnet sind, und daß die Sensoren (12) als optisch mit den lichtemittierenden Schichten (2,3) gekoppelte fotosensitive Bauelemente (4,5) ausgebildet sind.

4. Schaltungsanordnung nach Anspruch 3, **dadurch gekennzeichnet, daß** die lichtemittierenden Schichten (2,3) bei Auftreffen des Elektronenstrahls Licht im nicht sichtbaren Bereich, vorzugsweise im ultravioletten Bereich abgeben.

5. Schaltungsanordnung nach einem oder mehreren der Ansprüche 1 bis 4, **dadurch gekennzeichnet, daß** die Steuerschaltung (13) ein Stellglied (9) umfaßt, das mit einer Konvergenzschaltung (24) verbunden ist.

6. Schaltungsanordnung nach einem oder mehreren der Ansprüche 1 bis 5, **dadurch gekennzeichnet, daß** bei einer Ablenkschaltung (7) mit symmetrischer Zeilenablenkung der Auswerteschaltung (6) ein Komperator (8) zum Vergleich der Indexsignale mit den Zeilenablenksignalen nachgeschaltet ist, und daß die Steuerschaltung (13) als Stellglied (9) zur Verschiebung des Bildinhaltes von aufeinanderfolgend geschriebenen Zeilen ausgebildet ist.

7. Schaltungsanordnung nach Anspruch 6, **dadurch gekennzeichnet, daß** das Stellglied (9) ein Adresszähler für einen Zeilenspeicher (10) ist, der entsprechend dem Ausgangssignals des Komperators (8) den Adresszähler zum einen vorgegebenen Wert aufwärts oder abwärts setzt.

Fig. 1

Fig. 2

H 87/081-1

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 459 596 (SONY) <br> * Seite 10, Zeile 40 - Seite 12, Zeile 3; Figuren 1,6-8 * <br> --- | 1 | H 04 N 9/28 <br> H 04 N 3/233 |
| Y | GB-A-2 102 258 (TEKTRONIX) <br> * Seite 5, Zeilen 8-66; Seite 4, Zeilen 40-54; Seite 6, Zeilen 51-65; Figur 4 * | 1 | |
| A | | 3 | |
| | --- | | |
| A | PATENT ABSTRACTS OF JAPAN, Band 10, Nr. 332 (E-453)[2388], 12. November 1986; & JP-A-61 136 381 (SHARP CORP) 24-06-1986 <br> * Zusammenfassung * <br> --- | 3,4 | |
| P,A | PATENT ABSTRACTS OF JAPAN, Band 11, Nr. 343 (E-555)[2790], 10. November 1987; & JP-A-62 122 463 (MITSUBISHI ELECTRIC CORP) 03-06-1987 (Kat. A) <br> * Zusammenfassung * <br> ----- | 3,4 | |

| RECHERCHIERTE SACHGEBIETE (Int. Cl.4) |
|---|
| H 04 N <br> H 01 J |

Der vorliegende Recherchenbericht wurde für alle Patentansprüche erstellt

| Recherchenort | Abschlußdatum der Recherche | Prüfer |
|---|---|---|
| DEN HAAG | 23-12-1988 | BEQUET T.P. |